# EUROPEAN PATENT APPLICATION

(11) **EP 4 818 269 A1**
(43) Date of publication of application: **07.10.2026**
(21) Application number: 26160074.6
(22) Date of filing: 23.02.2026
(51) Int. Cl.: C09D 4/00, B32B 17/10, C08F 2/50, C08F 220/20, C08J 5/18, C09D 5/00, C08K 5/00

(54) **MOISTURE ABSORPTION FILM LAYERED PRODUCT**

(30) Priority: 27.03.2025 JP 2025053480
(71) Applicant: NIPPON STEEL CHEMICAL & MATERIAL CO., LTD., Tokyo 103-0027 (JP); MAZDA MOTOR CORPORATION, Hiroshima 730-8670 (JP)
(72) Inventor: SAITO, Takashi, Chuo-ku, Tokyo, 103-0027 (JP); MAEDA, Tetsuya, Fuchu-cho, Aki-gun, Hiroshima, 730-8670 (JP); SUGIMOTO, Tetsuya, Fuchu-cho, Aki-gun, Hiroshima, 730-8670 (JP)
(74) Representative: Kraus & Lederer PartGmbB

(57) **Abstract**

Provided is a moisture absorption film layered product that can be photocured in a short time by using ultraviolet ray and that has both excellent defogging properties and scratch resistance.

A moisture absorption film layered product, including a moisture absorption film formed on an at least partial surface of a substrate, wherein the moisture absorption film is formed by curing a photocurable resin composition including at least
a trifunctional or more (meth)acryl monomer (A) having no ethylene-oxide-modified (meth)acryloyl group,
a trifunctional or more (meth)acryl monomer (B) having at least three ethylene-oxide-modified (meth)acryloyl groups,
a hydroxyalkyl (meth)acrylate (C), and
a photo-initiator as essential components,
relative to 100 parts by weight of a total of the (A), the (B), and the (C),
a content of the (A) is 1 to 20 parts by weight,
a content of the (B) is 30 to 59 parts by weight, and
a content of the (C) is 40 to 69 parts by weight.

## Description

### BACKGROUND OF THE INVENTION

### Field of the Invention

The present invention relates to a layered product having a cured coating of an active energy ray curable composition, and specifically relates to a moisture absorption film layered product using a photocurable resin composition. A moisture absorption film in the moisture absorption film layered product of the present invention has excellent adhesiveness to the substrate and is able to impart excellent properties of scratch resistance and moisture absorbency.

### Description of the Related Art

In recent years, defogging technology of not causing dew condensation on a member such as a window has been required in vehicles such as automobiles, trucks, buses, and electric trains from the viewpoint of energy saving. In the defogging technology, a moisture absorption film is formed on the member such as a window to absorb moisture to be dew condensation in the moisture absorption film, and consequently exhibit the defogging function.

As such a moisture absorption film, proposed are, for example, a paint composition composed of a (meth)acrylic resin, a polyol compound, and a multifunctional isocyanate compound (Patent Literature 1), a composition containing a polyvinyl acetal resin (Patent Literatures 2 and 3), and a composition composed of a copolymer, a multifunctional block isocyanate compound, and a surfactant (Patent Literature 4).

### Citation List

Patent Literature 1: JP2019-94468
Patent Literature 2: JP2012-117025
Patent Literature 3: JP2001-146585
Patent Literature 4: JP2016-169288

### SUMMARY OF THE INVENTION

All the literature in Citation List are, however, thermal curing, and require high temperature and time in a curing step. Thus, the productivity is poor, and scratch resistance is insufficient. Although there is a method of adding a filler in order to improve the scratch resistance, water absorbency deteriorates.

In view of the above circumstances, an object of the present invention is to provide a moisture absorption film layered product that can be photocured by using ultraviolet ray in a short time compared with thermal curing, and that has both excellent defogging properties and scratch resistance.

The present inventors have made intensive investigation to achieve the above object, and consequently found that the above problem can be solved by the following means differing from the literature in Citation List. This finding has led to completion of the present invention.

Specifically, the present invention is a moisture absorption film layered product comprising a moisture absorption film formed on an at least partial surface of a substrate, wherein the moisture absorption film is formed by curing a photocurable resin composition comprising
a trifunctional or more (meth)acryl monomer (A) having no ethylene-oxide-modified (meth)acryloyl group,
a trifunctional or more (meth)acryl monomer (B) having at least three ethylene-oxide-modified (meth)acryloyl groups,
a hydroxyalkyl (meth)acrylate (C), and
a photo-initiator as essential components,
relative to 100 parts by weight of a total of the (A), the (B), and the (C),
a content of the (A) is 1 to 20 parts by weight,
a content of the (B) is 30 to 59 parts by weight, and
a content of the (C) is 40 to 69 parts by weight,
the moisture absorption film has a water absorption rate of 10 w% or more and 30 w% or less, and the moisture absorption film of the moisture absorption film layered product has a haze changing value ΔH before and after a Taber abrasion test of 4 or less.

The photocurable resin composition may contain a hindered-amine light stabilizer (D) having a (meth)acryl group within a range of 0.1 to 7.0 parts by weight relative to 100 parts by weight of the total of the (A), the (B), and the (C), and may contain an ultraviolet ray absorbent and/or a light stabilizer.

The moisture absorption film layered product of the present invention is suitable as a window member for a vehicle.

In addition, the present invention relates to a method of manufacturing the moisture absorption film layered product, the method comprising: a step 1 of applying a photocurable resin composition on a substrate; and a step 2 of irradiating the applied photocurable resin composition with active energy ray for curing the photocurable resin composition to form the moisture absorption film.

In the step 2, irradiation conditions of the active energy ray are preferably an illuminance within a wavelength region of 320 to 390 nm of 200 to 900 mW/cm² and an integrated light quantity of 1000 to 8000 mJ/cm².

Further, the present invention is a photocurable resin composition comprising at least:
a trifunctional or more (meth)acryl monomer (A) having no ethylene-oxide-modified (meth)acryloyl group;
a trifunctional or more (meth)acryl monomer (B) having at least three ethylene-oxide-modified (meth)acryloyl groups;
a hydroxyalkyl (meth)acrylate (C); and
a photo-initiator as essential components,
relative to 100 parts by weight of a total of the (A), the (B), and the (C),
a content of the (A) is 1 to 20 parts by weight,
a content of the (B) is 30 to 59 parts by weight, and
a content of the (C) is 40 to 69 parts by weight,
a moisture absorption film has a water absorption rate of 10 w% or more and 30 w% or less, the moisture absorption film being produced by irradiating the photocurable resin composition with active energy ray under conditions of an illuminance within a wavelength region of 320 to 390 nm of 200 to 900 mW/cm² and an integrated light quantity of 1000 to 8000 mJ/cm², and
the moisture absorption film produced on glass so as to have a thickness of 5 µm or more and 25 µm or less has a haze changing value ΔH before and after a Taber abrasion test of 4 or less.

The photocurable resin composition may further comprise a hindered-amine light stabilizer (D) having a (meth)acryl group within a range of 0.1 to 7.0 parts by weight relative to 100 parts by weight of the total of the (A), the (B), and the (C).

The present invention can provide the moisture absorption film layered product that can be photocured and that has both excellent moisture absorbency and scratch resistance.

### DETAILED DESCRIPTION OF THE INVENTION

Hereinafter, each element constituting the present invention will be described in detail, but the present invention is not limited to the description unless departing from its sprit. When the expression "(meth)acrylate" is used herein, the expression means either or both of "acrylate" and "methacrylate". The expressions "(meth)acrylate" and "(meth)acryloyl" are same as above.

### [Layered Product]

The moisture absorption film layered product of the present invention has a moisture absorption film formed on an at least partial surface of a substrate. The moisture absorption film may be formed on a partial surface of the substrate, on one surface of the substrate, on one entire surface of the substrate, or on both entire surfaces of the substrate.

The substrate is not particularly limited as long as the moisture absorption film can be formed, and may be constituted with, for example, an inorganic material, may be constituted with an organic material, or may be constituted with a composite material of an inorganic material and an organic material. Among these, glass, which is poor at moisture absorbency, is preferable, and example thereof include silicate salt glass (silicate glass, silicate alkali glass, lead alkali glass, soda-lime glass, potassium-lime glass, and barium glass), borosilicate glass, and phosphonate glass, and further include plate glass composed of these glasses, such as general plate glass (common plate glass, figured glass, polished plate glass, and float glass), composite glass, laminated glass, and reinforced glass. A curved surface laminated glass used for a window for a vehicle is particularly preferable. These types of glass may be colorless or colored.

The photocurable resin composition of the present invention contains a trifunctional or more (meth)acryl monomer (A) having no ethylene-oxide-modified (meth)acryloyl group, a trifunctional or more (meth)acryl monomer (B) having at least three ethylene-oxide-modified (meth)acryloyl groups, a hydroxyalkyl (meth)acrylate (C), and a photo-initiator as essential components, and is obtained by adding the (A) within a range of 1 to 20 parts by weight, the (B) within a range of 30 to 59 parts by weight, and the (C) within a range of 40 to 69 parts by weight relative to 100 parts by weight of a total of the (A), the (B), and the (C). In terms of balance between the water absorption rate and the scratch resistance, a more preferable blending proportion of the (A) is 5 to 15 parts by weight, a more preferable blending proportion of the (B) is 30 to 50 parts by weight, and a more preferable blending proportion of the (C) is 45 to 60 parts by weight.

In the present invention, the ethylene-oxide-modified (meth)acryloyl group refers to a group represented by

CH₂=CR-CO(OC₂H₄)ₙ-.

Here, the R independently represents a hydrogen atom or a methyl group, "n" indicates a number of modification with ethylene oxide, and "n" independently represents an integer of 1 to 20.

Specific examples of the trifunctional or more (meth)acryl monomer (A) having no ethylene-oxide-modified (meth)acryloyl group used in the present invention include glycerol tri(meth)acrylate, trimethylolpropane tri(meth)acrylate, pentaerythritol tri(meth)acrylate, pentaerythritol tetra(meth)acrylate, dipentaerythritol hexa(meth)acrylate, and a polyorganosilsesquioxane having (meth)acryloyl groups. Since the monomer (A) has three or more (meth)acryl groups in one molecule, a dense crosslinking structure is constructed to be expected to impart the scratch resistance. The blending proportion of the (A) is preferably 1 to 20 parts by weight relative to 100 parts by weight of the total of the (A), the (B), and the (C). If the blending proportion is less than 1 part by weight, the scratch resistance may be insufficient, and if the blending proportion is more than 20 parts by weight, the moisture absorption film may become hard and fragile. A more preferable range thereof is 5 to 15 parts by weight.

Specific examples of the trifunctional or more (meth)acryl monomer (B) having at least three ethylene-oxide-modified (meth)acryloyl groups used in the present invention include ethoxylated glycerol (meth)acrylate and ethoxylated pentaerythritol tetra(meth)acrylate. The number of modification with ethylene oxide is preferably 6 to 60 per molecule. If the number is less than 6, water absorption performance becomes low, and the water absorption rate of the moisture absorption film may decrease. If the number is more than 60, the moisture absorption film becomes soft, and the scratch resistance may deteriorate. A more preferable range thereof is 9 to 36 per molecule. The blending proportion of the (B) is preferably 30 to 59 parts by weight relative to 100 parts by weight of the total of the (A), the (B), and the (C). If the blending proportion is less than 30, the water absorbency deteriorates, and if the blending proportion is more than 59, water generated on the surface of the moisture absorption film due to dew condensation, etc. is dried to generate a precipitate, which deteriorates transparency. The precipitate is presumed to be a compound in which the ethylene oxide moiety is decomposed when irradiated with ultraviolet ray during photocuring, etc., and recombined. An amount of the precipitate to be generated differs depending on the number of functional groups in the ethylene-oxide-modified (meth)acryl monomer. When the blending proportions are the same, a smaller number of functional groups generates a larger amount of the precipitate. For the above reason, the trifunctional or more ethylene-oxide-modified (meth)acryl monomer is preferably used. When the blending proportion is more than 59, the moisture absorption film becomes soft, and the scratch resistance may deteriorate. A more preferable range thereof is 30 to 50 parts by weight.

Specific examples of the hydroxyalkyl (meth)acrylate (C) used in the present invention include 2-hydroxyethyl (meth)acrylate, 2-hydroxypropyl (meth)acrylate, and 2-hydroxybutyl (meth)acrylate. Since the (meth)acryl monomer (C) is monofunctional and has one hydroxy group in one molecular, the moisture absorbency of the moisture absorption film can be expected to increase. Specifically, the moisture absorbency becomes higher with a shorter alkyl chain, and 2-hydroxyethyl (meth)acrylate is more preferably used. The blending proportion is preferably 40 to 69 parts by weight relative to 100 parts by weight of the total of the (A), the (B), and the (C). If the blending proportion is less than 40 parts by weight, the water absorbency becomes insufficient. If the blending proportion is more than 69 parts by weight, the three-dimensional crosslinking in the moisture absorption film becomes insufficient to form a soft film, and the scratch resistance may become insufficient. A more preferable blending proportion thereof is 45 to 60 parts by weight.

Into the photocurable resin composition of the present invention, a hindered-amine light stabilizer (D) having a (meth)acryl group can be added for a purpose of improving weather resistance. Specific examples thereof include 1,2,2,6,6-pentamethyl-4-piperidyl=methacrylate, 2,2,6,6-tetramethyl-4-piperidyl=methacrylate, 1,2,2,6,6-pentamethyl-4-piperidyl=acrylate, and 2,2,6,6-tetramethyl-4-piperidyl=acrylate. The light stabilizer (D) having a (meth)acryl group can be crosslinked with the methacryl monomer, bleed out is inhibited to exhibit the effect by the light stabilizer in a long term, and deterioration in the scratch resistance can be inhibited. A blending proportion thereof is preferably 0.1 to 7.0 parts by weight relative to 100 parts by weight of the total of the (A), the (B), and the (C). If the blending proportion is less than 0.1, the effect of the weather resistance becomes insufficient, and if the blending proportion is more than 7.0, the scratch resistance and the water absorbency deteriorate. A more preferable range thereof is a range of 1.0 to 6.0 parts by weight, and a further preferable range thereof is a range of 2.0 to 5.5 parts by weight.

In the photocurable resin composition of the present invention, an amount of the photo-initiator added is preferably within a range of 0.01 to 10 parts by weight relative to 100 parts by weight of the total of the (A), the (B), and the (C). If the addition amount is less than this range, crosslinking becomes insufficient to decrease an elastic modulus, which fails to obtain a desired surface hardness. In contrast, containing at an amount exceeding this range cannot be expected to further increase the reaction ratio. The amount is more preferably within a range of 5 to 10 parts by weight.

The photo-initiator is not particularly limited, and common photo-initiators can be widely applied. Acetophenone compounds, benzoyl compounds, benzophenone compounds, thioxanthone compounds, acylphosphine oxide compounds, etc. can be suitably used. Specific examples thereof include trichloroacetophenone, diethoxyacetophenone, 1-phenyl-2-hydroxy-2-methylpropan-1-one, 1-hydroxycyclohexyl phenyl ketone, 2-methyl-1-(4-methylthiophenyl)-2-morpholinopropan-1-one, benzoin methyl ether, benzil dimethyl ketal, benzophenone, 4,4'-bis(diethylamino)benzophenone, methyl benzophenone-2-carboxylate, 4-benzoyl-4'-methyldiphenyl sulfide, 2-hydroxy-2-methyl-1-phenylpropan-1-one, 1-[4-(2-hydroxyethoxy)phenyl]-2-hydroxy-2-methyl-1-propan-1-one, 2-hydroxy-1-{4-[4-(2-hydroxy-2-methylpropionyl)benzyl]phenyl}-2-methylpropan-1-one, 2-methyl-1-[4-(methylthio)phenyl]-2-morpholinopropan-1-one, thioxanthone, 2,4,6-trimethylbenzoyldiphenylphosphine oxide, methyl phenyl glyoxylate, camphor quinone, benzil, anthraquinone, and Michler's ketone. In addition, a photo-initiation auxiliary or a sensitizer, which are combined with the photo-initiator to exhibit the effect, may be used in combination.

The photocurable resin composition may be diluted with a solvent for purposes of regulating a solid-content concentration, improving dispersion stability, improving coatability, improving adhesiveness to the substrate, etc.

Examples of the solvent include organic solvents. Examples of the organic solvent include alcohols, ketones, ethers, esters, cellosolves, and aromatic compounds. Specific examples thereof include methanol, ethanol, 1-propanol, 2-propanol, 1-butanol, 2-butanol, isobutyl alcohol, t-butyl alcohol, benzyl alcohol, 2-methoxyethanol, 2-ethoxyethanol, 2-(methoxymethoxy)ethanol, 2-butoxyethanol, furfuryl alcohol, tetrahydrofurfuryl alcohol, diethylene glycol, diethylene glycol monomethyl ether, diethylene glycol monoethyl ether, diethylene glycol monobutyl ether, 1-methoxy-2-propanol, 1-ethoxy-2-propanol, dipropylene glycol, dipropylene glycol monomethyl ether, dipropylene glycol monoethyl ether, tripropylene glycol monomethyl ether, diacetone alcohol, acetone, methyl ethyl ketone, 2-pentanone, 3-pentanone, 2-hexanone, methyl isobutyl ketone, 2-heptanone, 4-heptanone, diisobutyl ketone, cyclohexanone, methylcyclohexanone, acetophenone, diethyl ether, dipropyl ether, diisopropyl ether, dibutyl ether, dihexyl ether, anisole, phenetole, tetrahydrofuran, tetrahydropyran, 1,2-dimethoxyethane, 1,2-diethoxyethane, 1,2-dibutoxyethane, diethylene glycol dimethyl ether, diethylene glycol diethyl ether, diethylene glycol dibutyl ether, glycerol ether, methyl acetate, ethyl acetate, propyl acetate, isopropyl acetate, butyl acetate, isobutyl acetate, sec-butyl acetate, pentyl acetate, isopentyl acetate, 3-methoxybutyl acetate, 2-ethylbutyl acetate, 2-ethylhexyl acetate, methyl propionate, ethyl propionate, butyl propionate, γ-butyrolactone, 2-methoxyethyl acetate, 2-ethoxyethyl acetate, 2-butoxyethyl acetate, 2-phenoxyethyl acetate, diethylene glycol monoethyl ether acetate, diethylene glycol monobutyl ether acetate, benzene, toluene, and xylene. These organic solvents can be used singly, or in combination of two or more thereof.

Into the photocurable resin composition of the present invention, an ultraviolet ray absorbent and a light stabilizer (an ultraviolet ray stabilizer) other than the hindered-amine light stabilizer (D) having a (meth)acryl group can be added for a purpose of improving the weather resistance.

As the ultraviolet ray absorbent, inorganic materials such as inorganic oxide fine particles such as titanium oxide, cerium oxide, zirconium oxide, and zinc oxide, metal chelate compounds of titanium, zinc, zirconium, etc., and a (partial) hydrolysate or condensate thereof, and organic materials can be used.

Examples of the organic ultraviolet ray absorbent preferably include compound derivatives having a main skeleton of hydroxybenzophenone, benzotriazole, cyanoacrylate, or triazine. Further, a polymer having these ultraviolet ray absorbents on the side chain, an ultraviolet ray absorbent having a reactive functional group, or a silylation-modified ultraviolet ray absorbent, or (partial) hydrolyzing condensate thereof may also be used. Specific examples thereof include 2-(2-hydroxy-5-t-butylphenyl)-2H-benzotriazole, 2-[5-chloro-(2H)-benzotriazol-2-yl]-4-methyl-6-(t-butyl)phenol, 2-(2H-benzotriazol-2-yl)-6-(1-methyl-1-phenylethyl)-4-(1,1,3,3-tetramethylbutyl)phenol, 2-[4-[(2-hydroxy-3-(2'-ethyl)hexyl)oxy]-2-hydroxyphenyl]-4,6-bis(2,4-dimethylphenyl)-1,3,5-triazine, (co)polymer of 2-hydroxy-4-(2-acryloxyethoxy)benzophenone, and (co)polymer of 2-(2'-hydroxy-5'-methacryloxyethylphenyl)-2H-benzotriazole. These ultraviolet ray absorbents may be used in combination of two or more thereof.

As the ultraviolet ray stabilizer other than the hindered-amine light stabilizer (D) having a (meth)acryl group, an ultraviolet ray stabilizer having one or more cyclic hindered amine structure(s) in a molecule is preferable. Specific examples thereof include bis(2,2,6,6-tetramethyl-1-(octyloxy)-4-piperidyl) ester, 3-dodecyl-1-(2,2,6,6-tetramethyl-4-piperidinyl)pyrrolidine-2,5-dione, N-methyl-3-dodecyl-1-(2,2,6,6-tetramethyl-4-piperidinyl)pyrrolidine-2,5-dione, N-acetyl-3-dodecyl-1-(2,2,6,6-tetramethyl-4-piperidinyl)pyrrolidine-2,5-dione, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl)1,2,3,4-butanetetracarboxylate, and tetrakis(1,2,2,6,6-pentamethyl-4-piperidyl) 1,2,3,4-butanetetracarboxylate. These ultraviolet ray stabilizers may be used in combination of two or more thereof.

In the photocurable resin composition of the present invention, various additives can be added in addition to the aforementioned components within a range of, for example, not deteriorating the function. Examples of various additives include an organic/inorganic filler, a plasticizer, a flame retardant, a thermal stabilizer, an oxidation inhibitor, a lubricant, an antistatic agent, a demolding agent, a foaming agent, a nucleating agent, a colorant, a crosslinking agent, a dispersion auxiliary, and a resin component.

Examples of a method of applying the photocurable resin composition on the substrate include a flow casting method, a roller coating method, a bar coating method, a spray coating method, an air-knife coating method, a spin-coating method, a flow-coating method, a curtain coating method, and a dipping method. The coating film thickness is regulated by the solid-content concentration with considering a formation film thickness after the curing by drying and active energy ray irradiation.

When the solvent is used for diluting the photocurable resin composition of the present invention, the solvent is preferably removed by drying, etc. after the coating. The drying temperature is preferably a condition not deforming the used substrate, and the drying time is preferably 1 hour or shorter from the viewpoint of productivity.

When the solvent is used, a surface modifier can be used for modifying film formability of the obtained coating. As the surface modifier, acrylic-based, silicone-based, and fluorinated surface modifiers can be used. All of them has ability to act on the coating surface to reduce surface tension, but preferably used differently according to the application and the purpose. The silicone-based and fluorinated surface modifiers have strong ability to reduce the surface tension, and the acrylic-based surface modifier has extremely few problems such as recoating, and has advantages such as usability for both finish coating and intermediate coating. A blending amount of the surface modifier is preferably 0.01 to 2 parts by weight relative to 100 parts by weight of the total of the (A), the (B), and the (C).

The moisture absorption film of the present invention can be manufactured by curing the aforementioned photocurable resin composition by irradiation with active energy ray such as visible light ray, ultraviolet ray, and electron beam. Preferably, the cured formed product can be obtained by irradiation with ultraviolet ray having a wavelength of 10 to 400 nm or visible light ray having a wavelength of 400 to 700 nm. The wavelength of the used light is not particularly limited, and near ultraviolet ray having a wavelength of 200 to 400 nm is particularly suitably used. Examples of a lamp used as an ultraviolet ray generation source include a low-pressure mercury lamp (output: 0.4 to 4 W/cm), a high-pressure mercury lamp (40 to 160 W/cm), ultrahigh-pressure mercury lamp (173 to 435 W/cm), and a metal halide lamp (80 to 160 W/cm).

The method of obtaining the moisture absorption film by irradiation with active energy ray such as light irradiation may be any one of under an oxygen-blocking atmosphere or an air atmosphere, and preferably under the oxygen-blocking atmosphere. Specific examples of the method include a method of filling the irradiation space with nitrogen and a method of blocking oxygen by using a layered product film during the irradiation.

A thickness of the moisture absorption film of the present invention is preferably 1 to 100 µm, and more preferably 3 to 50 µm from the viewpoint of scratch resistance and adhesiveness. If the thickness is less than 1 µm, the water absorption amount of the moisture absorption film is low to loss the defogging performance of the window member for a vehicle in a short time. On the other hand, the thickness is more than 100 µm, the water absorption amount is large to keep the defogging performance over a long term, but visibility deteriorates due to difference in refractive index with the substrate.

The moisture absorption film layered product of the present invention obtained as above has a water absorption rate of the moisture absorption film of 10 w% or more and 30 w% or less, and has a haze changing value ΔH before and after a Taber abrasion test performed with a TABER abrading wheel CS-10F, a load of 500 g, and a number of rotation of 100, of 4 or less. That is, the moisture absorption film layered product having excellent defogging properties and scratch resistance can be obtained.

The water absorption rate is preferably 12 w% to 30 w%. If the water absorption rate is less than 10 w%, the moisture absorption film needs to be thick for keeping the defogging performance as a window member for a vehicle and for achieving the water absorption amount, but thickening the moisture absorption film causes a problem of deterioration in visibility due to difference in refractive index with the substrate. In addition, to form a moisture absorption film having a water absorption rate of 30 w% or more, the crosslinking density needs to be reduced to form a soft film that easily absorbs moisture and expands, which is unpreferable because the scratch resistance inevitably deteriorates.

### Examples

Hereinafter, Examples of the present invention will be described.

### Example 1

Performed was mixing:
A1: a mixture of dipentaerythritol hexaacrylate and dipentaerythritol pentaacrylate (manufactured by Nippon Kayaku Co., Ltd., KAYARAD DPHA) at 10 parts by weight, as Component (A);
B1: ethoxylated glycerol triacrylate (manufactured by SHIN-NAKAMURA CHEMICAL Co., Ltd., A-GLY-9E) at 30 parts by weight, as Component (B);
C1: 2-hydroxyethyl methacrylate at 60 parts by weight, as Component (C);
P1: 1-hydroxy-cyclohexyl phenyl ketone (manufactured by IGM RESINS B.V., Omnirad 184) at 7.5 parts by weight and P2: 2-methyl-1-[4-(methylthio)phenyl]-2-morpholinopropan-1-one (manufactured by IGM RESINS B.V., Omnirad 907) at 1.0 part by weight, as photo-initiators;
S1: propylene glycol monomethyl ether at 80 parts by weight, as a solvent; and
a fluorinated surface modifier F1 at 0.04 parts by weight to obtain a photocurable resin composition.

Then, the photocurable resin composition blended as above was applied on a blue-board glass in 100×100 mm square with 1 mm in thickness subjected to a silane-coupling-agent treatment with a spin coater so that a film thickness after drying was 15 µm, and dried at 60°C for 10 minutes. Thereafter, the coating was exposed by using a metal-halide lamp (manufactured by EYE GRAPHICS COMPANY, ME04-L41) through a heat-ray-cutting filter that cut light having a wavelength of 250 nm or shorter to be cured under conditions of illuminance of 500 mW/cm² and integrated exposure dose of 4000 mJ/cm² to obtain a moisture absorption film layered product in which a moisture absorption film with 15 µm in thickness was formed on the glass substrate surface. Note that the illuminance and the integrated exposure dose were measured by using an illuminance/exposure dose meter (manufactured by Electronic Instrumentation and Technology LLC (EIT), UVCURE Plus-II High-Renge 320-390 nm, measurement wavelength range: 320 to 390 nm).

### Examples 2 to 7 and Comparative Examples 1 to 4

Moisture absorption film layered products were obtained in the same manner as in Example 1 except that raw materials, blending proportion, and film thickness shown in Table 1 were used. The other abbreviated name in Table are as shown below.
A2: polyorganosilsesquioxane having (meth)acryloyl groups (synthesized product)
B2: ethoxylated pentaerythritol tetraacrylate (manufactured by SHIN-NAKAMURA CHEMICAL Co., Ltd., ATM-35E)
D1: 1,2,2,6,6-pentamethyl-4-piperidyl=methacrylate (manufactured by ADEKA CORPORATION, ADK STAB LA-82)
D2: 2,2,6,6-tetramethyl-4-piperidyl=methacrylate (manufactured by ADEKA CORPORATION, ADK STAB LA-87)
U1: 2-[5-chloro-(2H)-benzotriazol-2-yl]-4-methyl-6-(t-butyl)phenol (manufactured by BASF SE, TINUVIN 384-2) as an ultraviolet ray absorbent
U2: hindered-amine light stabilizer (manufactured by ADEKA CORPORATION, ADK STAB LA-63P) as a light stabilizer

Each of various characteristics was measured and evaluated by the following method. Table 1 also show the evaluation results.

### [Adhesiveness]

On a surface of each of the layered product specimens, 100 lattices with 1 mm × 1 mm were produced in accordance with JIS K 5600-5-6 (1990), an adhesive tape was adhered to the surface, and the tape was quickly peeled. Then, this procedure was repeated three times in total to evaluate a degree of peeling using the residual state of the lattices based on the following criteria.
Good: A number of the residual lattices was 100
Poor: A number of the residual lattices was 0 to 99

### [Moisture Absorbency]

A water absorption rate of the moisture absorption film in each of the moisture absorption film layered products was measured by the following methods. Specifically, a weight of the glass substrate having the water absorption film (hereinafter, referred to as sample) was measured with a balance under an environment of a humidity of 20% RH, and a weight of the moisture absorption film was calculated from a weight of only the glass substrate measured in advance.

The sample was retained under a constant temperature and humidity environment of 95% RH (set temperature: 30°C) for 1 to 2 hours, and then change in weight of the sample was measured with a balance to specify a water absorption amount of the moisture absorption film.

From the weight of the moisture absorption film and the water absorption amount of the moisture absorption film, the water absorption rate was calculated based on the following formula. 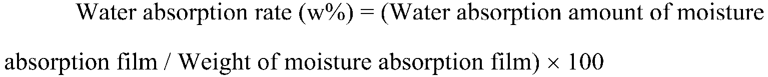 Water absorption rate (w%) = (Water absorption amount of moisture absorption film / Weight of moisture absorption film) × 100

A higher water absorption rate was judged as better moisture absorbency, and the moisture absorbency was evaluated based on the water absorption rate with the following criteria.
Excellent: $30 w % \geq Water absorption rate \geq 15 w %$
Good: $15 w % > Water absorption rate \geq 10 w %$
Poor: $Water absorption rate < 10 w %$

### [Scratch Resistance]

A Taber abrasion test with reference to JIS K7204 using an abrading wheel CS-10F, a load of 500 g, and a number of rotation of 100 was performed to evaluate Taber abrasion resistance with a haze changing value ΔH before and after the test. The haze value was measured by using a haze meter manufactured by NIPPON DENSHOKU INDUSTRIES CO., LTD., a slit with luminous flux of ϕ7 mm. $ΔH = \left(Haze value after Taber abrasion test\right) - \left(Haze value before test\right)$

A smaller ΔH (%) was judged as better scratch resistance, and the scratch resistance was evaluated based on the following criteria.
Good: $0 < ΔH \leq 4$
Poor: $ΔH > 4$

### [Weather Resistance]

By using a xenon weather meter tester, the glass surface of the moisture absorption film layered product was irradiated with light under conditions at a temperature of 73°C and a relative humidity of 35%Rh at a xenon lump illuminance of 180 W/m² (300 to 400 nm), and the weather resistance was evaluated with appearance of the moisture absorption film layered product after the test.
Excellent: there is no change after an irradiation dose of 1000 MJ.
Good: there is no change after an irradiation dose of 500 MJ, and there is change after an irradiation dose of 1000 MJ.
Fair: there is no change after an irradiation dose of 200 MJ, and there is change after an irradiation dose of 500 MJ.
Poor: there is change after an irradiation dose of 200 MJ.

### [White Precipitate]

Each of the moisture absorption film layered products was cooled to -15°C, then dew condensation was generated under an environment at 80%RH (set temperature: 23°C), and dried at 50%RH (set temperature: 23°C). The evaluation was performed with a haze value. A lower haze value indicated a smaller amount of a precipitate generated due to the dew condensation, which was evaluated as good transparency based on the following criteria. The haze value was measured by using a haze meter manufactured by NIPPON DENSHOKU INDUSTRIES CO., LTD., a slit with luminous flux of ϕ7 mm.
Good: a haze value of less than 3
Poor: a haze value of 3 or more

**[Table 1]**

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Component (A) | A1 | 10 | 10 | 10 | 15 | 15 | 5 | 0 | 0 | 40 | 0 | 20 |
| | A2 | 0 | 0 | 0 | 0 | 0 | 0 | 5 | 0 | 0 | 0 | 0 |
| Component (B) | B1 | 30 | 30 | 0 | 35 | 35 | 25 | 25 | 70 | 30 | 65 | 20 |
| | B2 | 0 | 0 | 45 | 0 | 0 | 25 | 25 | 0 | 0 | 0 | 0 |
| Component (C) | C1 | 60 | 60 | 45 | 50 | 50 | 45 | 45 | 30 | 30 | 35 | 60 |
| Component (D) | D1 | 0 | 1 | 2.5 | 5 | 5 | 0 | 5 | 0 | 5 | 0 | 5 |
| | D2 | 0 | 0 | 0 | 0 | 0 | 5 | 0 | 0 | 0 | 5 | 0 |
| Photo-initiator | P1 | 7.5 | 7.5 | 7.5 | 7.5 | 7.5 | 7.5 | 7.5 | 7.5 | 7.5 | 7.5 | 7.5 |
| | P2 | 1.0 | 1.0 | 1.0 | 1.0 | 1.0 | 1.0 | 1.0 | 1.0 | 1.0 | 1.0 | 1.0 |
| Solvent | S1 | 80 | 80 | 80 | 80 | 100 | 80 | 80 | 80 | 80 | 80 | 80 |
| Ultraviolet ray absorbent | U1 | 0 | 0 | 0 | 0 | 1 | 0 | 0 | 0 | 0 | 0 | 0 |
| Light stabilizer | U2 | 0 | 0 | 1 | 0 | 1 | 1 | 1 | 0 | 0 | 0 | 0 |
| Surface modifier | F1 | 0.04 | 0.04 | 0.04 | 0.04 | 0.04 | 0.04 | 0.04 | 0.04 | 0.04 | 0.04 | 0.04 |
| Film thickness (µm) | | 15 | 15 | 15 | 15 | 5 | 15 | 15 | 15 | 15 | 15 | 15 |
| Adhesiveness | | Good | Good | Good | Good | Good | Good | Good | Poor | Poor | Poor | Good |
| Moisture absorbency | | Good | Good | Excellent | Good | Good | Excellent | Excellent | Good | Poor | Good | Poor |
| Scratch resistance | | Good | Good | Good | Good | Good | Good | Good | Poor | Good | Poor | Good |
| Weather resistance | | Fair | Good | Excellent | Excellent | Excellent | Excellent | Excellent | Fair | Excellent | Excellent | Excellent |
| White precipitate | | Good | Good | Good | Good | Good | Good | Good | Poor | Good | Poor | Good |

## Claims

1. A moisture absorption film layered product, comprising a moisture absorption film formed on an at least partial surface of a substrate, wherein the moisture absorption film is formed by curing a photocurable resin composition comprising at least
a trifunctional or more (meth)acryl monomer (A) having no ethylene-oxide-modified (meth)acryloyl group,
a trifunctional or more (meth)acryl monomer (B) having at least three ethylene-oxide-modified (meth)acryloyl groups,
a hydroxyalkyl (meth)acrylate (C), and
a photo-initiator as essential components,
relative to 100 parts by weight of a total of the (A), the (B), and the (C),
a content of the (A) is 1 to 20 parts by weight,
a content of the (B) is 30 to 59 parts by weight, and
a content of the (C) is 40 to 69 parts by weight,
the moisture absorption film has a water absorption rate of 10 w% or more and 30 w% or less, and the moisture absorption film of the moisture absorption film layered product has a haze changing value ΔH before and after a Taber abrasion test of 4 or less.

2. The moisture absorption film layered product according to claim 1, wherein the photocurable resin composition further comprises a hindered-amine light stabilizer (D) having a (meth)acryl group within a range of 0.1 to 7.0 parts by weight relative to 100 parts by weight of the total of the (A), the (B), and the (C).

3. The moisture absorption film layered product according to claim 1 or 2, wherein the photocurable resin composition further comprises an ultraviolet ray absorbent and/or a light stabilizer.

4. The moisture absorption film layered product according to claim 1 or 2, wherein the moisture absorption film layered product is used as a window member for a vehicle.

5. A method of manufacturing the moisture absorption film layered product according to claim 1 or 2, the method comprising:
a step 1 of applying a photocurable resin composition on a substrate; and
a step 2 of irradiating the applied photocurable resin composition with active energy ray for curing the photocurable resin composition to form the moisture absorption film.

6. The method of manufacturing the moisture absorption film layered product according to claim 5, wherein, in the step 2, the active energy ray has an illuminance within a wavelength region of 320 to 390 nm of 200 to 900 mW/cm² and an integrated light quantity of 1000 to 8000 mJ/cm².

7. A photocurable resin composition, comprising at least:
a trifunctional or more (meth)acryl monomer (A) having no ethylene-oxide-modified (meth)acryloyl group;
a trifunctional or more (meth)acryl monomer (B) having at least three ethylene-oxide-modified (meth)acryloyl groups;
a hydroxyalkyl (meth)acrylate (C); and
a photo-initiator as essential components,
relative to 100 parts by weight of a total of the (A), the (B), and the (C),
a content of the (A) is 1 to 20 parts by weight,
a content of the (B) is 30 to 59 parts by weight, and
a content of the (C) is 40 to 69 parts by weight,
a moisture absorption film has a water absorption rate of 10 w% or more and 30 w% or less, the moisture absorption film being produced by irradiating the photocurable resin composition with active energy ray under conditions of an illuminance within a wavelength region of 320 to 390 nm of 200 to 900 mW/cm² and an integrated light quantity of 1000 to 8000 mJ/cm², and
the moisture absorption film produced on glass so as to have a thickness of 5 µm or more and 25 µm or less has a haze changing value ΔH before and after a Taber abrasion test of 4 or less.

8. The photocurable resin composition according to claim 7, further comprising a hindered-amine light stabilizer (D) having a (meth)acryl group within a range of 0.1 to 7.0 parts by weight relative to 100 parts by weight of the total of the (A), the (B), and the (C).
